# EUROPEAN PATENT SPECIFICATION

(11) **EP 4 006 700 B1**
(45) Date of publication and mention of the grant of the patent: **14.10.2026**
(21) Application number: 22151586.9
(22) Date of filing: 14.03.2013
(51) Int. Cl.: G06F 3/01, G06F 3/04847, G06F 3/04883

(54) **ON-DEMAND USER CONTROL**
ABRUFBARE BENUTZERSTEUERUNG
COMMANDE D'UTILISATEUR À LA DEMANDE

(30) Priority: 08.01.2013 US 201361750210 P
(43) Date of publication of application: 01.06.2022
(62) Document number(s) of the earlier application(s) in accordance with Art. 76 EPC: 13159138.0 / 2 752 747
(73) Proprietor: BlackBerry Limited, Waterloo, Ontario N2K 0A7 (CA)
(72) Inventor: DODGE, Danny Thomas, Kanata, Ontario, K2K 0B3 (CA)
(74) Representative: MERH-IP Matias Erny Reichl Hoffmann Patentanwälte PartG mbB

(56) References cited:
- EP-A1- 1 942 401
- US-A1- 2006 161 870
- US-A1- 2012 226 977

## Description

### BACKGROUND

### 1. Cross-Reference to Related Applications

This application claims priority from U.S. Provisional Patent Application Serial No. 61/750,210, filed January 8, 2013.

### 2. Technical Field

The present disclosure relates to the field of human-machine interfaces. In particular, to a system and method for on-demand user control.

### 3. Related Art

Touch-sensitive display devices may be used to provide a human-machine interface (HMI; a.k.a. user interface (UI) or graphical user interface (GUI)) that receives user inputs sensed by the device (e.g., touch gestures on the display surface). The touch-sensitive display devices may represent display content that includes visual metaphors (a.k.a. soft controls; e.g., soft keys) that represent tactile controls (e.g., buttons) that provide visual prompts or enhance familiarity to ease the user's interactions with the HMI.
As an example, US 2006/161870 A1 discloses a method of initiating floating controls on an electronic device, wherein the presence of an object above and spaced away from a surface of the electronic device is detected an a GUI element is displayed in response.

In some systems the touch-sensitive display device's display area (a.k.a. screen real-estate) is limited due to considerations including: size/portability of the system, bill-of-material (BOM) cost, graphics processing limitations, and other similar factors. In these systems the use of soft controls may be compromised by the desire to include multiple soft controls on the display, each being sufficiently large for ease of user interaction, while also wanting to preserve display area for other visual content and status information.

### BRIEF DESCRIPTION OF DRAWINGS

The system and method may be better understood with reference to the following drawings and description. The components in the figures are not necessarily to scale, emphasis instead being placed upon illustrating the principles of the disclosure. Moreover, in the figures, like referenced numerals designate corresponding parts throughout the different views.

**.**
Figs. 1A-1D are a time series representation of an on-demand user control.
Fig. 2 is a schematic representation of a system for on-demand user control.
Fig. 3 is a further schematic representation of a system for on-demand user control.
Fig. 4 is a representation of a method for on-demand user control.
Figs. 5A-5D are schematic representations of example appearances for a user control.
Figs. 6A-6C are schematic representations of further example appearances for a user control.
Fig. 7 is a schematic representation of a user's hand interacting with a user control.

### DETAILED DESCRIPTION

A system and method for on-demand user control detect a user's intent to interact with a currently undisplayed user control. The user's intent includes a hand approaching a touch-sensitive screen device. In response to the detected intent, the currently undisplayed user control is displayed. The choice and location of the displayed user control are derived from a location associated with the detected intent. The user control is displayed progressively giving the appearance of morphing from the display screen. The user may interact with the displayed user control using, for example, gestures on the touch-sensitive screen device.

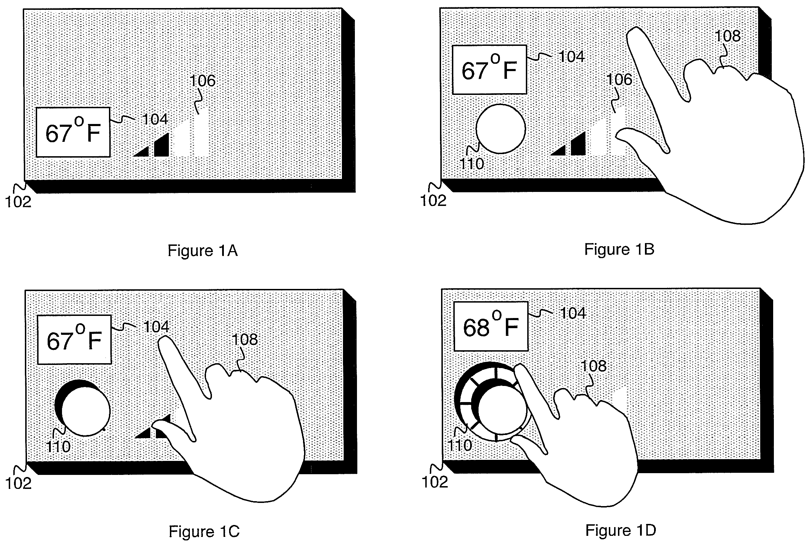

Figures 1A-1D are a time series representation of an on-demand user control. Figure 1A illustrates an example touch-sensitive display device 102 having two visual content elements, a desired temperature 104 and a fan speed setting 106. The touch-sensitive device 102 may be, for example, a component of an infotainment system installed in a vehicle such as an automobile. In Figure 1B a user's hand 108 is illustrated approaching the touch-sensitive display. A system for on-demand user control detects a user's intent to interact with a currently undisplayed user control by detecting the approaching hand of the user 108. In response to detecting the user's intent, the system begins to display a user control 110. The user control 110 may be a visual representation on the touch-sensitive display device 102 of a tactile (e.g., physical) control element that may be familiar to the user. The user control 110 may take the place of, or displace, an existing visual content element (e.g., the desired temperature 104). Alternatively, the user control 110 may be placed in an area not previously occupied by another visual content element other than a background or other ornamentations.

Figure 1C illustrates the user's hand 108 getting closer to the touch-sensitive display device 102. As the user's hand 108 gets closer the system displays more of the user control 110. The user control 110 may appear to be extruded from the surface of the touch-sensitive display device 102. In Figure 1D the user's hand 108 is in contact with the surface of the touch-sensitive display device 102 and user control 110 has been rendered into a final desired appearance. The user control 110 is created by visually transitioning (a.k.a. morphing) from an existing visual content element or background to the final desire appearance for the user control 110. Morphing may include initially applying one or more surface textures from an existing visual content element or background to the user control 110 and then transitioning to one or more final desired surface textures for the user control 110.

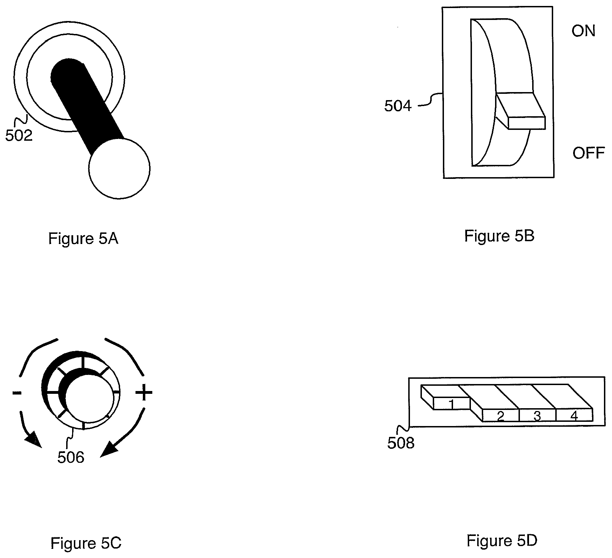

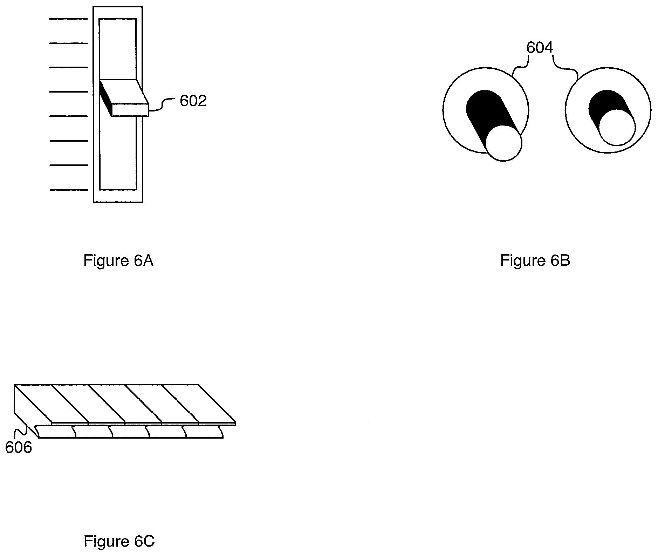

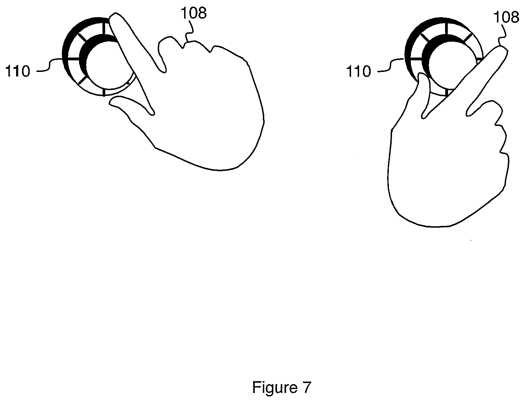

Figure 7 is a schematic representation of a user's hand 108 interacting with a rotary control type of user control 110. The illustration on the left shows the user's forefinger and thumb proximate the top and bottom, respectively, of the user control 110 (proximate the 12 and 6 o'clock positions using a clock face metaphor). The illustration on the right shows the user's forefinger and thumb after they have transitioned (e.g., rotated) to proximate the 3 and 9 o'clock positions respectively. The interaction of the user with the user control 110 may be characterized as the user control 110 having been turned clockwise a quarter turn or 90 degrees. Alternatively, the interaction may be characterized as the user control 110 having been turned from, for example, the 12 o'clock to the 3 o'clock positions. In a further alternative, the interaction may be characterized as the user control 110 having been turned clockwise (or to the right) by, for example, eight steps for a user control having 32 steps (a.k.a. detents or clicks) per revolution. Similarly, the user's interactions with the other types of user controls, such as those illustrated in Figures 5A-5D and 6A-6C and describe below, may be characterized in any way that is appropriate to the type of user control. The interactions with, or operations of, the various types of user controls may be expressed in either relative (e.g., eight steps to the right) or absolute (e.g., turned to the 3 o'clock position) terms as is appropriate for the type of user control being represented. The characterization of the user's interaction with the user control 110 may be sent to other processing elements such as, for example, one or more applications, system software, an operating system or other similar processing elements for further processing.

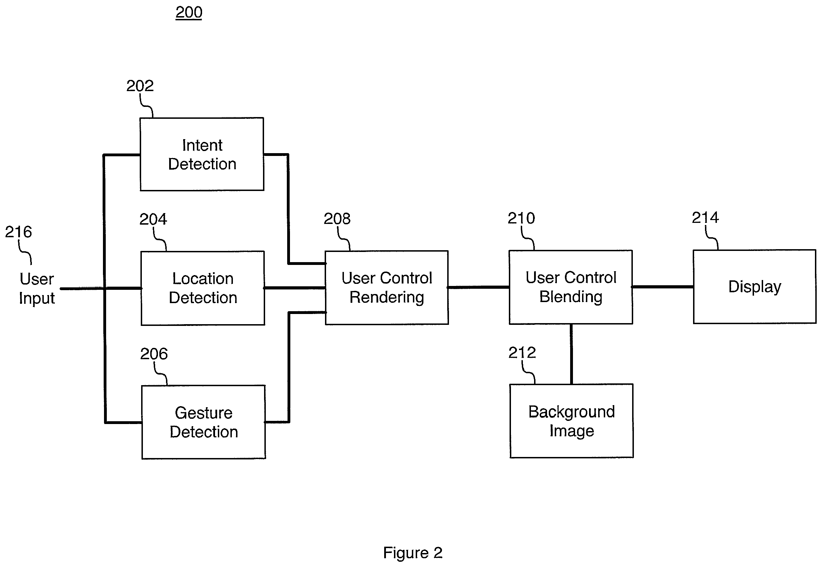

Figure 2 is a schematic representation of functional components of a system for on-demand user control. The example system 200 may comprise functional modules for intent detection 202, location detection 204, gesture detection 206, user control rendering 208 and user control blending 210. The intent detection module 202 may detect a user's intent to interface with a user control 110 by, for example, detecting that the user's hand 108 is approaching a touch sensitive display 214. Alternatively or in addition, the intent detection module 202 may detect that the user's hand 108 is close to (e.g., proximate) or in contact with the display 214. Any mechanism that allows detection of the user's hand 108 in relation to the display 214 including, without limitation, capacitance, thermal, resistive and optical sensing mechanisms may be used to provide user input 216 to the intent detection module 202, the location detection module 204 and the gesture detection module 206. The intent detection module 202 may provide to the user control rendering module 208 any one or more of: an indication that the user's hand 108 has been detected, a position or distance relative to the display 214 and a direction of movement of the user's hand 108 (e.g., approaching the display). The providing of the indications may be event driven, periodic, on-demand or a combination of these.

The location detection module 204 may receive user input 216 as describe above from which a location of the user's hand 108 relative to the display 214 may be determined. The location may be expressed, for example, using Cartesian coordinates (e.g., X,Y) relative to the display 214. The location may be determined to be proximate to a status indicator or information element (e.g., 104 and 106) displayed on the display 214 or proximate to one of one or more designated areas on the display. A user control, of one or more user controls, may be associated with each status indicator, information element and designated area. The determined location and identification of an associated user control may be provided to the user control rendering module 208.

The gesture detection module 206 may receive user input 216 as described above from which a gesture by the user's hand 108 can be determined. The gesture may be interpreted taking into account a type of user control that is displayed approximate the location of the gesture. Different types of gestures may be associated with each type of user control including, for example, one-dimensional translations (e.g., sliding or toggling), two-dimensional translations (e.g., sliding or rotation) and touches (e.g., pressing). The interpreted gesture may be associated with a particular action of the user control such as, for example, turning a knob, toggling a switch or pressing a button. In addition, the interpreted gesture may be associated with relocating, modifying or dismissing the user control. The gesture and/or the associated user control action may be provided to the user control rendering module 208.

The user control rendering module 208 may render a user control (e.g., 110) and provide for having it displayed on the display 214. The user control rendering module 208 may be triggered to render the user control based on one or more indications received from the intent detection module 202. The location for displaying the user control and the type of user control to render may be determined from the location and identification of the user control received from the location detection module 204. Further, animation of the user control (e.g., the appearance of extruding of the control from the display surface, rotating a knob or toggling a switch) may be based on any combination of indications and information received from the intent detection module 202, the location detection module 204 and the gesture detection module 206.

The user control rendering module 208 may cause the rendered user control to be displayed on the display 214. The user control blending module 210 may, optionally, blend the appearance of the user control provided by the user control rendering module 208 with a background image 212 before the user control is displayed on the display 214. The background image 212 may include one or more visual content elements (e.g., the desired temperature 104 or the fan speed setting 106) and/or may include areas represented using surface textures and/or colors. The user control blending module 210 may mix textures and colors of the background image with textures and colors of the rendered user control, may superposition the user control over the background image using alpha blending, or use any other graphics compositing mechanisms. The user control blending module 210 may be used in both displaying and animating the user control on the display 214.

The system 200 optionally may include a mechanism to provide a haptic feedback to the user. The haptic feedback may include, for example, deforming or otherwise modifying the surface of the display 102 or 214 in the area proximate where the user control 110 is displayed such that the user may be able to feel a presence of the user control 110. The haptic feedback mechanism may be integral or external to the display 102 or 214. The haptic feedback may be modified or changed when the user provides a gesture to operate the user control 110. For example, the shape, size and/or location of the haptic feedback may change. Alternatively, or in addition, transient feedback may be provided to simulate detents (clicks), key depressions, key rebounds or control resistance. The haptic feedback mechanism may include, without limitation, piezoelectric, piezo-polymer, vibration generating or any other haptic feedback generating technologies.

Figures 5A-5D are schematic representations of example appearances for a user control. Figures 6A-6C are schematic representations of further example appearances for a user control. The user control may appears as: a joystick 502, a toggle switch 504, a rotary control (a.k.a. a jog dial or knob) 506, a group of radio buttons 508, a slider 602, a push button 604, or a set of piano keys 606. The example appearances of user controls in Figures 5A-5D and 6A-6C are illustrative only and not intended to be limiting in any way. The user control may take on the appearance of any physical control type that lends itself to being visually represented on the display device and interacted with by the user.

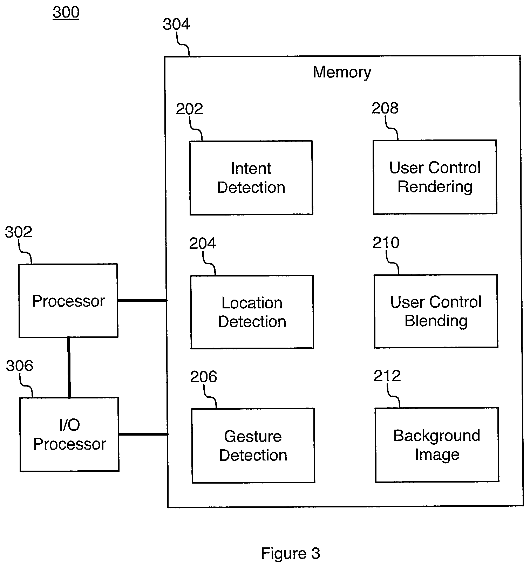

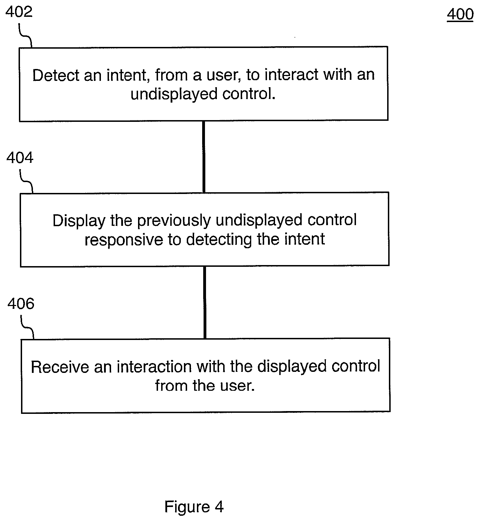

Fig. 4 is a representation of a method for on-demand user control. The method 400 may be, for example, implemented using either of the systems 200 and 300 described herein with reference to Figures 2 and 3 . The method 400 includes the act of detecting an intent, of a user, to interact with an undisplayed user control 402. Detecting the intent may include detecting that the user's hand 108 is approaching or is proximate to the display 214. Detecting the intent may further comprise determining a location associated with the user's action and associating one of one or more user controls with the determined location. Association of the determined location with one or more user controls may be based on information (e.g., declared regions on the display) provided by a system component or by an application internal or external to the system 200. Alternatively, or in addition, association of the determined location with one or more user controls may be based on a response to query send to interface, system function or application internal or external to the system 200.

The associated user control, which was previously undisplayed, may be displayed responsive to detecting the user's intent 404. The displaying of the user control may be progressive where, for example, the user control appears to emerge from (e.g., be extruded or morphed from) the display 214 in response to the user's hand 108 getting closer to the display 214. When the user control is displayed, an interaction by the user with the displayed control may be received 406. The received interaction may be in the form of a gesture. In response to receiving the user interaction, the display of the user control may be updated to reflect a change in the appearance of the user control resulting from the interaction (e.g., the flipping of a switch or depressing of a button). Further, in response to receiving the user interaction, a command or control operation may be communicated to an application, other components of the system or to another system. The command or control operation may be expressed as a function of the user control type and/or a control function associated with the location of the user control.

Figure 3 is a further schematic representation of a system for on-demand user control. The system 300 comprises a processor 302, memory 304 (the contents of which are accessible by the processor 302) and an I/O interface 306. The memory 304 may store instructions which when executed using the process 302 may cause the system 300 to render the functionality associated with the intent detection module 202, the location detection module 204, the gesture detection module 206, the user control rendering module 208 and the user control blending module 210 as described herein. In addition the memory 304 may store the background image 212.

The processor 302 may comprise a single processor or multiple processors that may be disposed on a single chip, on multiple devices or distributed over more that one system. The processor 302 may be hardware that executes computer executable instructions or computer code embodied in the memory 304 or in other memory to perform one or more features of the system. The processor 302 may include a general purpose processor, a central processing unit (CPU), a graphics processing unit (GPU), an application specific integrated circuit (ASIC), a digital signal processor (DSP), a field programmable gate array (FPGA), a digital circuit, an analog circuit, a microcontroller, any other type of processor, or any combination thereof.

The memory 304 may comprise a device for storing and retrieving data, processor executable instructions, or any combination thereof. The memory 304 may include non-volatile and/or volatile memory, such as a random access memory (RAM), a read-only memory (ROM), an erasable programmable read-only memory (EPROM), or a flash memory. The memory 304 may comprise a single device or multiple devices that may be disposed on one or more dedicated memory devices or on a processor or other similar device. Alternatively or in addition, the memory 304 may include an optical, magnetic (hard-drive) or any other form of data storage device.

The memory 304 may store computer code, such as the intent detection module 202, the location detection module 204, the gesture detection module 206, the user control rendering module 208 and the user control blending module 210 as described herein. The computer code may include instructions executable with the processor 302. The computer code may be written in any computer language, such as C, C++, assembly language, channel program code, and/or any combination of computer languages. The memory 304 may store information in data structures including, for example, the background image 212.

The I/O interface 306 may be used to connect devices such as, for example, a mechanism to detect the user's hand 108, a virtual keyboard interface, touch-sensitive display 102 or 214, and to other components of the system 300.

Flags, data, databases, tables, entities, and other data structures may be separately stored and managed, may be incorporated into a single memory or database, may be distributed, or may be logically and physically organized in many different ways. The components may operate independently or be part of a same program or hardware. The components may be resident on separate hardware, such as separate removable circuit boards, or share common hardware, such as a same memory and processor for implementing instructions from the memory. Programs may be parts of a single program, separate programs, or distributed across several memories and processors.

The functions, acts or tasks illustrated in the figures or described may be executed in response to one or more sets of logic or instructions stored in or on computer readable media or non-transitory media. The functions, acts or tasks are independent of the particular type of instructions set, storage media, processor or processing strategy and may be performed by software, hardware, integrated circuits, firmware, micro code and the like, operating alone or in combination. Likewise, processing strategies may include multiprocessing, multitasking, parallel processing, distributed processing, and/or any other type of processing. In one embodiment, the instructions are stored on a removable media device for reading by local or remote systems. In other embodiments, the logic or instructions are stored in a remote location for transfer through a computer network or over telephone lines. In yet other embodiments, the logic or instructions may be stored within a given computer such as, for example, a CPU.

## Claims

1. A method of displaying an on-demand control on a system having a display (214), the method comprising:
detecting a user's hand (108) approaching the display (214) wherein the detecting includes detecting a direction of movement of the user's hand;
determining a location of the user's hand relative to the display;
choosing a type of control to display responsive to the determined location;
displaying, on the display device, a previously undisplayed control (110) in response to the detection (404), wherein the control (110) is displayed at a location on the display (214) which is derived from the determined location of the user's hand,
wherein the displaying comprises animating the control (110), wherein the animating is based on the determined location of the user's hand and a distance of the user's hand relative to the display (214),
and when the control (110) is displayed, receiving an interaction with the control from the user (406);
**characterized in that**
the displaying of the control (110) is progressive where the user control appears to be morphed from the display (214) in response to the user's hand (108) getting closer to the display (214) such that as the user's hand gets closer to the display more of the control is displayed.

2. The method of claim 1, wherein the animating is based on one or more of: an indication that the user's hand has been detected, and a direction of movement of the user's hand.

3. The method of claim 1 or 2, further comprising updating the display of the control (110) to reflect a change in the appearance of the control responsive to the received interaction.

4. The method of any preceding claim, further comprising in response to receiving the interaction, communicating a command or control operation to an application, a component of the system, or another system.

5. The method of claim 4, wherein the command or control operation is expressed as a function of the type of control and/or a control function associated with the location of the control (110).

6. The method of any preceding claim, wherein the control (110) takes the place of or displaces an existing visual element (104).

7. The method of any preceding claim, wherein the control (110) is a representation of a physical control.

8. The method of any preceding claim, further comprising providing haptic feedback.

9. The method of claim 8, wherein the haptic feedback is modified responsive to the received interaction with the control (110).

10. A system for on-demand user control comprising:
a touch-sensitive display device (214); one or more processors (302); and
a memory (304) containing instructions executable by the one or more processors (302) to configure the system to implement the method of any of claims 1 to 9.

11. A computer readable medium comprising computer-executable instructions which, when executed by a processor of a system according to claim 10, perform the method of any of claims 1 to 9.

## Patentansprüche

1. Verfahren zum Anzeigen einer Bedarfssteuerung auf einem System, die eine Anzeige (214) hat, wobei das Verfahren Folgendes aufweist:
Detektieren einer Benutzerhand (108), die sich der Anzeige (214) nähert, wobei das Detektieren ein Detektieren einer Bewegungsrichtung der Benutzerhand einschließt;
Bestimmen einer Position der Benutzerhand relativ zu der Anzeige;
auf die bestimmte Position ansprechendes Auswählen eines Typs von Steuerung zur Anzeige;
auf die Detektion (404) ansprechendes Anzeigen einer zuvor nicht angezeigten Steuerung (110) auf der Anzeigevorrichtung, wobei die Steuerung (110) an einer Position auf der Anzeige (214) angezeigt wird, die von der bestimmten Position der Benutzerhand abgeleitet ist,
wobei das Anzeigen ein Animieren der Steuerung (110) aufweist, wobei das Animieren auf der bestimmten Position der Benutzerhand und einem Abstand der Benutzerhand relativ zu der Anzeige (214) basiert,
und Empfangen einer Interaktion mit der Steuerung von dem Benutzer (406), wenn die Steuerung (110) angezeigt wird,
**dadurch gekennzeichnet, dass**
das Anzeigen der Steuerung (110) fortschreitend ist, wo die Benutzersteuerung als Reaktion darauf, dass die Benutzerhand (108) näher an die Anzeige (214) kommt, von der Anzeige (214) aus sich derart zu wandeln scheint, dass, wenn die Benutzerhand näher an die Anzeige kommt, mehr von der Steuerung angezeigt wird.

2. Verfahren nach Anspruch 1, wobei das Animieren auf einem oder mehreren von Folgendem basiert: einer Angabe, dass die Benutzerhand detektiert wurde, und einer Bewegungsrichtung der Benutzerhand.

3. Verfahren nach Anspruch 1 oder 2, das weiter ein Aktualisieren der Anzeige der Steuerung (110) dazu aufweist, eine Änderung in dem Erscheinungsbild der Steuerung als Reaktion auf die empfangene Interaktion widerzuspiegeln.

4. Verfahren nach einem der vorhergehenden Ansprüche, das weiter als Reaktion auf das Empfangen der Interaktion ein Kommunizieren eines Befehls oder einer Steuerungsoperation an eine Anwendung, eine Komponente des Systems oder ein anderes System aufweist.

5. Verfahren nach Anspruch 4, wobei der Befehl oder die Steuerungsoperation als eine Funktion des Typs von Steuerung und/oder einer Steuerungsfunktion ausgedrückt wird, die mit der Position der Steuerung (110) verknüpft ist.

6. Verfahren nach einem der vorhergehenden Ansprüche, wobei die Steuerung (110) an die Stelle eines existierenden visuellen Elements (104) tritt oder dieses verschiebt.

7. Verfahren nach einem der vorhergehenden Ansprüche, wobei die Steuerung (110) eine Repräsentation einer physischen Steuerung ist.

8. Verfahren nach einem der vorhergehenden Ansprüche, das weiter ein Bereitstellen einer haptischen Rückmeldung aufweist.

9. Verfahren nach Anspruch 8, wobei die haptische Rückmeldung als Reaktion auf die empfangene Interaktion mit der Steuerung (110) modifiziert wird.

10. System zur Bedarfsbenutzersteuerung mit:
einer berührungsempfindlichen Anzeigevorrichtung (214);
einem oder mehreren Prozessoren (302); und
einem Speicher (304), der Anweisungen beinhaltet, die durch den einen oder
die mehreren Prozessoren (302) dazu ausführbar sind, das System dazu zu konfigurieren, das Verfahren nach einem der Ansprüche 1 bis 9 umzusetzen.

11. Von einem Computer lesbares Medium, das von einem Computer ausführbare Anweisungen aufweist, die, wenn sie durch einen Prozessor eines Systems nach Anspruch 10 ausgeführt werden, das Verfahren nach einem der Ansprüche 1 bis 9 durchführen.

## Revendications

1. Procédé d'affichage d'une commande à la demande sur un système ayant un affichage (214), le procédé comprenant :
la détection d'une main d'utilisateur (108) s'approchant de l'affichage (214), dans lequel la détection comprend la détection d'une direction de mouvement de la main de l'utilisateur ;
la détermination d'un emplacement de la main de l'utilisateur par rapport à l'affichage ;
le choix d'un type de commande à afficher en réponse à l'emplacement déterminé ;
l'affichage, sur le dispositif d'affichage, d'une commande précédemment non affichée (110) en réponse à la détection (404), dans lequel la commande (110) est affichée à un emplacement sur l'affichage (214) qui est dérivé de l'emplacement déterminé de la main de l'utilisateur,
dans lequel l'affichage comprend l'animation de la commande (110), dans lequel l'animation est basée sur l'emplacement déterminé de la main de l'utilisateur et une distance de la main de l'utilisateur par rapport à l'affichage (214),
et lorsque la commande (110) est affichée, la réception d'une interaction avec la commande de l'utilisateur (406),
**caractérisé en ce que**
l'affichage de la commande (110) est progressif lorsque la commande d'utilisateur semble être transformée à partir de l'affichage (214) en réponse à la main de l'utilisateur (108) se rapprochant de l'affichage (214) de sorte que lorsque la main de l'utilisateur se rapproche de l'affichage, une plus grande partie de la commande est affichée.

2. Procédé selon la revendication 1, dans lequel l'animation est basée sur une ou plusieurs parmi : une indication que la main de l'utilisateur a été détectée, et une direction de mouvement de la main de l'utilisateur.

3. Procédé selon la revendication 1 ou 2, comprenant en outre la mise à jour de l'affichage de la commande (110) pour refléter un changement dans l'apparence de la commande en réponse à l'interaction reçue.

4. Procédé selon l'une quelconque des revendications précédentes, comprenant en outre, en réponse à la réception de l'interaction, la communication d'une commande ou d'une opération de commande à une application, un composant du système, ou un autre système.

5. Procédé selon la revendication 4, dans lequel la commande ou l'opération de commande est exprimée en fonction du type de commande et/ou d'une fonction de commande associée à l'emplacement de la commande (110).

6. Procédé selon l'une quelconque des revendications précédentes, dans lequel la commande (110) remplace ou déplace un élément visuel existant (104).

7. Procédé selon l'une quelconque des revendications précédentes, dans lequel la commande (110) est une représentation d'une commande physique.

8. Procédé selon l'une quelconque des revendications précédentes, comprenant en outre la fourniture d'une rétroaction haptique.

9. Procédé selon la revendication 8, dans lequel la rétroaction haptique est modifiée en réponse à l'interaction reçue avec la commande (110).

10. Système de commande d'utilisateur à la demande comprenant :
un dispositif d'affichage tactile (214) ;
un ou plusieurs processeurs (302) ; et
une mémoire (304) contenant des instructions exécutables par le ou les processeurs (302) pour configurer le système pour mettre en œuvre le procédé selon l'une quelconque des revendications 1 à 9.

11. Support lisible par ordinateur comprenant des instructions exécutables par ordinateur qui, lorsqu'elles sont exécutées par un processeur d'un système selon la revendication 10, réalisent le procédé selon l'une quelconque des revendications 1 à 9.
